(19) Europäisches Patentamt
European Patent Office
Office européen des brevets

(11) **EP 1 465 034 B1**

(12) **EUROPÄISCHE PATENTSCHRIFT**

(45) Veröffentlichungstag und Bekanntmachung des Hinweises auf die Patenterteilung:
**07.05.2008 Patentblatt 2008/19**

(51) Int Cl.:
***G05B 19/416*** *(2006.01)*

(21) Anmeldenummer: **04005278.9**

(22) Anmeldetag: **05.03.2004**

(54) **Steuerverfahren zur rückbegrenzten Geschwindigkeitsführung eines bewegbaren Maschinenelementes einer numerisch gesteuerten industriellen Bearbeitungsmaschine**

Control method for jerk-limited velocity control of a movable machine member of a numerically controlled industrial machine

Procédé de contrôle de la commande de vitesse pour limiter les à-coups d'un élément mobile d'une machine-outil à commande numérique

(84) Benannte Vertragsstaaten:
**DE FR GB**

(30) Priorität: **04.04.2003 DE 10315525**

(43) Veröffentlichungstag der Anmeldung:
**06.10.2004 Patentblatt 2004/41**

(73) Patentinhaber: **SIEMENS AKTIENGESELLSCHAFT 80333 München (DE)**

(72) Erfinder:
• **Ladra, Uwe**
  **91056 Erlangen (DE)**
• **Schäfers, Elmar Dr.**
  **90419 Nürnberg (DE)**

(56) Entgegenhaltungen:
DE-A- 10 016 137    DE-A- 10 063 722
US-B1- 6 320 345

EP 1 465 034 B1

**Beschreibung**

Die Erfindung bezieht sich auf ein Steuerverfahren zur ruckbegrenzten Geschwindigkeitsführung eines bewegbaren Maschinenelementes einer numerisch gesteuerten industriellen Bearbeitungsmaschine wie einer Werkzeugmaschine, Produktionsmaschine oder einem Roboter, wobei eine Bewegungsbahn des Maschinenelementes in unmittelbar aufeinanderfolgende interpolierbare Bewegungsabschnitte aufgelöst ist, wobei bei der Interpolation resultierende Ruckprofile gezielt derart angepasst werden, dass eine filternde Wirkung der Ruckbegrenzung als Bandsperren so beeinflusst wird, dass die Frequenzen der Bandsperren im wesentlichen mit den Eigenfrequenzen des Maschinenelementes und/ oder der Maschine oder mit einer Auswahl solcher Eigenfrequenzen zusammenfallen.

Jedes schwingungsfähige, mechanische System (z.B. alle Achsen von Werkzeugmaschinen) ist in der Regel durch mindestens eine Eigenfrequenz gekennzeichnet, die bei einem Bewegungs- bzw. Verfahrvorgang angeregt wird und sich im Lageistwert bemerkbar macht. Aus diesem Grund ist man bestrebt, die Anregung der Mechanik der Maschine zu vermeiden.

Für die Geschwindigkeitsführung einer numerischen Steuerung, z.B. für eine Werkzeugmaschine, Produktionsmaschine oder einem Roboter, gehört daher heutzutage eine Ruckbegrenzung zum Stand der Technik. Damit soll eine geringere Belastung der einzelnen Achsen einer Maschine erreicht werden, ohne große Nachteile in der Programmbearbeitungszeit zu erhalten.

Mit einer Ruckbegrenzung ist es möglich, den Aufbau der Beschleunigung für einen Bewegungsvorgang so zu verzögern, dass der Sollwert geglättet und die Mechanik möglichst wenig schwingungsanregend bewegt wird.

Die Glättungswirkung einer Ruckbegrenzung ist jedoch stark vom geforderten Sollwertverlauf abhängig. Messungen und theoretische Untersuchungen haben gezeigt, dass höherfrequente Beschleunigungs- und Bremsvorgänge mit geringerer Dynamik durchgeführt werden müssen, um die schwingungsfähige Mechanik nicht so stark anzuregen. Diese Abhängigkeit gilt sowohl bei kurzen Positioniervorgängen, als auch z.B. im Bahnsteuerbetrieb der Maschine.

Derzeit wird als Abhilfe für dieses Problem der Ruck- und Beschleunigungsgrenzwert so niedrig eingestellt, dass auch hochfrequente Änderungen der Bahngeschwindigkeit die Schwingungen nicht zu stark anregen. Durch diese geringen eingestellten Dynamikwerte wird jedoch unerwünschterweise oftmals eine höhere Bahngeschwindigkeit und damit eine kürzere Programmbearbeitungszeit verhindert.

Eine bekannte Methode, um ein Maschinen-schonendes Geschwindigkeitsprofil zu erhalten, ist eine Ruckbegrenzung. In einer Phase 1 wird auf die maximal zulässige Beschleunigung verfahren. In Phase 2 wird konstant weiterbeschleunigt, die Geschwindigkeit nimmt nur noch linear zu. In Phase 3 wird die Beschleunigung wieder abgebaut. Im Folgenden wird mit dem Begriff Beschleunigung immer auch die Möglichkeit einer negativen Beschleunigung eingeschlossen.

Am Ende der Phase 3 ist somit eine maximal zulässige Bahngeschwindigkeit erreicht, mit der in einer Phase 4 weiter verfahren wird. In weiteren Phasen 5 bis 7 wird die Geschwindigkeit nun analog abgebaut, so dass die Bahngeschwindigkeit bei Erreichen einer Sollposition Null beträgt. Dazu wird in der Phase 5 eine negative Beschleunigung aufgebaut, die in der Phase 6 konstant gehalten wird und in der Phase 7 schließlich wieder zu Null abgebaut wird. Bezüglich der Ruckbelastung einer Maschine ist die Steigung der Beschleunigung in den Phasen 1, 3, 5 und 7 kritisch. In diesen Phasen weist der Geschwindigkeitsverlauf einen polynominalen Verlauf auf, während in den übrigen Phasen die Geschwindigkeit linear verläuft oder konstant ist.

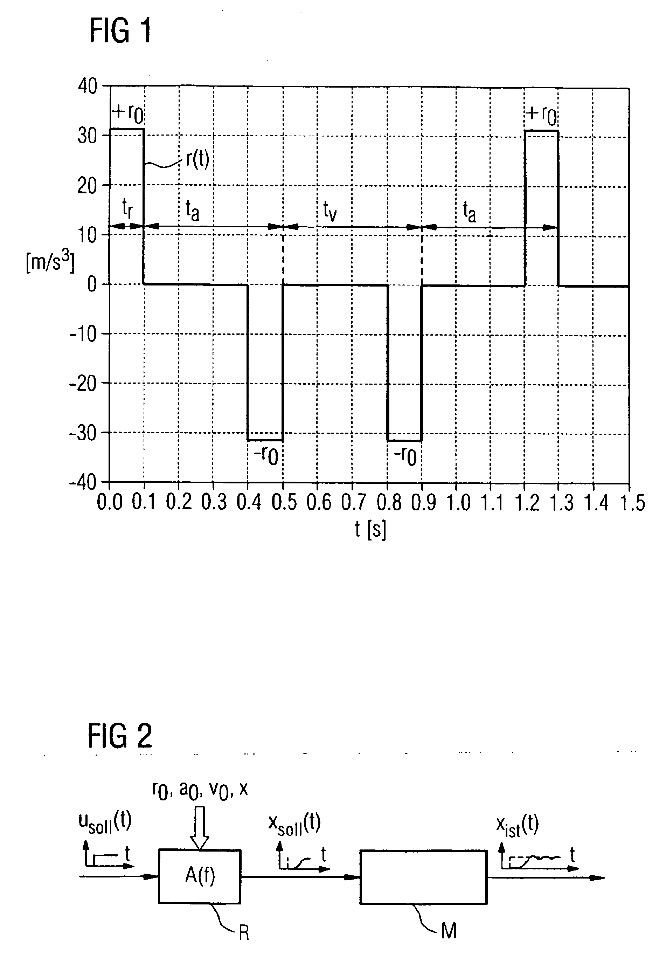

Bisher setzt sich der zeitliche Verlauf des Rucks $r(t)$ somit aus konstanten rechteckförmigen Grundformen zusammen. Die Darstellung in FIG 1 zeigt den zeitlichen Verlauf des Rucks $r(t)$ in Abhängigkeit von Zeiten $t_r$, $t_a$, und $t_v$, welche die jeweiligen Zeitspannen des Rucks $r(t)$ für einen beispielhaften Bewegungsvorgangs eines bewegbaren Maschinenelementes angeben. Der Ruck $r(t)$ ist entweder gleich Null oder gleich seinem zulässigen Maximalwert $r_0$ mit positivem oder negativem Vorzeichen: $r(t) \in \{0, +r_0, -r_0\}$.

Der Verlauf des Rucks $r(t)$ für eine Bewegungsvorgang bzw. für einen Verfahrvorgang des bewegbaren Maschinenelementes wird im folgenden auch als Ruckprofil $r(t)$ bezeichnet.

Problematisch dabei ist aber - wie eingangs erwähnt -, dass solche hochdynamischen Beschleunigungs- und Bremsvorgänge entlang der Bewegungsbahn x des Maschinenelementes in einem bestimmten Frequenzbereich zur Anregung von mechanischen Schwingungen führen können. Die Dynamik dieser Vorgänge sollte daher an die Maschinengegebenheiten angepasst werden.

Aus einer früheren Patentanmeldung (Anmeldeaktenzeichen des Deutschen Patent- und Markenamtes: 102 00 680.6) der Anmelderin ist ein Steuerverfahren zur ruckbegrenzten Geschwindigkeitsführung eines bewegbares Maschinenelementes einer numerisch gesteuerten industriellen Bearbeitungsmaschine bekannt, bei der mit Hilfe einer gezielten Beeinflussung des Ruckprofils bzw. durch Anpassung des Ruckprofils mit Hilfe einer $\sin^2$-förmigen Formfunktion eine Verbesserung des Einschwingverhaltens der bewegbaren Maschinenelemente erzielt wird.

Gegenüber dem Stand der Technik wird durch das erfindungsgemäße Steuerverfahren eine neue Vorgehensweise beschrieben, bei der anders als bei den bisher vorgestellten Ansätzen nicht eine spezielle Formfunktion gewählt, sondern anhand der dominierenden Maschineneigenfrequenzen eine optimale Formfunktion berechnet wird. Dadurch wird erreicht, dass bei geforderter Genauigkeit die Maschinendynamik gegenüber den bisherigen Lösungsansätzen wesentlich gesteigert werden kann.

Ein weiteres Verfahren ist aus DE 10 063 722 bekannt, wobei dort zur Ruckbegrenzung im Bereich einer kritischen Eigenfrequenz eines Maschinenelements bzw. der Maschine für eine Dauer, die dem Kehrwert der kritischen Eigenfrequenz entspricht, mit einem maximalen Ruck verfahren wird.

Aufgabe der vorliegenden Erfindung ist es daher, ein Steuerverfahren anzugeben, dass die Anregung kritischer Resonanzfrequenzen einer Maschine oder eines beweglichen Maschinenelementes vermeidet, wobei eine gegenüber dem Stand der Technik wesentlich kleinere Schwingungsanregung beim Verfahren des gleichen Weges in der gleichen Zeit gewährleistet wird.

Diese Aufgabe wird durch das Steuerverfahren gemäß Anspruch 1 gelöst.

Durch die beschriebene gezielte Anpassung des Ruckverlaufs mittels einer parameterabhängigen Formfunktion wird eine Anregung von Resonanzen vermieden. Damit wird unter anderem ermöglicht, die Dynamikgrenzwerte stark zu erhöhen und damit einen Gewinn in der Programmbearbeitungszeit zu erhalten.

Wesentliche Vorteile des beschriebenen erfindungsgemäßen Verfahrens bestehen unter anderem darin:

Eine gegenüber dem Stand der Technik schnelleres Verfahren des Maschinenelementes bei gleicher Schwingungsanregung zu ermöglichen.

Für Werkzeugmaschinen, Produktionsmaschinen oder Roboter bedeutet das wesentlich weichere Verfahren, höhere Genauigkeit z.B. bei der Oberflächenbearbeitung, sowie bessere Qualität.

Für Werkzeugmaschinen, Produktionsmaschinen oder Roboter bedeutet das schnellere Bearbeiten mit der gleichen Qualität, größere Stückzahl in der gleichen Zeit und größere Effektivität.

Eine erste vorteilhafte Ausbildung der Erfindung ist dadurch gekennzeichnet, dass zur gezielten Anpassung der Frequenzen der Bandsperren, an die Eigenfrequenzen des Maschinenelementes und/oder der Maschine oder an eine Auswahl solcher Eigenfrequenzen, die Formfunktion mittels Parameter gezielt angepasst werden. Dies ermöglicht eine besonders einfache Anpassung der Frequenzen der Bandsperren an die Eigenfrequenzen der Maschinenelementes und/oder der Maschine oder an eine Auswahl von ihnen.

Eine weitere vorteilhafte Ausbildung der Erfindung ist dadurch gekennzeichnet, dass zur gezielten Anpassung der Frequenz einer einzelnen Bandsperre, an eine Eigenfrequenz des Maschinenelementes und/oder der Maschine, die Formfunktion ($F_s(t,\alpha)$) mittels eines einzigen Parameters ($\alpha$) gezielt angepasst wird. Da nur ein einziger Parameter zur Anpassung der Formfunktion benötigt wird, kann eine gezielte Anpassung der Frequenz einer Bandsperre, an die Eigenfrequenz des Maschinenelementes und/oder der Maschine besonders einfach erzielt werden.

Wenn die parameterabhängige Formfunktion sich additiv aus einer rechteckförmigen Formfunktion und einer $\cos^2$-förmigen oder $\sin^2$-förmigen Formfunktion zusammensetzt, kann ein besonders günstiger Verlauf der Formfunktion bzw. des daraus resultierenden Ruckprofils hinsichtlich einer gezielten Anpassung der Frequenz der Bandsperre, an die Eigenfrequenz des Maschinenelementes und/oder der Maschine erzielt werden.

Wenn die parameterabhängige Formfunktion ($F_s(t,\alpha)$) sich additiv aus einer rechteckförmigen Formfunktion ($F_1(t)$) und einer Dirac-Formfunktion ($F_3(t)$) zusammensetzt, kann ein besonders günstiger Verlauf der Formfunktion bzw. des daraus resultierenden Ruckprofils hinsichtlich einer gezielten Anpassung der Frequenz der Bandsperre, an die Eigenfrequenz des Maschinenelementes und/oder der Maschine erzielt werden.

Wenn eine Formänderung des Ruckprofils derart vorgenommen wird, dass die Fläche des Ruckprofils nach der Formänderung der Fläche des Ruckprofils vor der Formänderung bei gleicher Zeit entspricht, wird das Auftreten von Wegverlusten vermieden.

Eine weitere vorteilhafte Ausbildung der Erfindung ist dadurch gekennzeichnet, dass vor Ausführung einer vorgegebenen Bewegungsbahn des Maschinenelementes, zuerst ein entsprechendes optimiertes rechteckförmiges Ruckprofil bestimmt wird, so dass die Frequenzen der Bandsperren im wesentlichen mit den Eigenfrequenzen des Maschinenelementes und/oder der Maschine oder mit einer Auswahl solcher Eigenfrequenzen zusammenfallen und anschließend das bereits optimierte rechteckförmige Ruckprofil durch Anpassung mittels der parameterabhängigen Formfunktion, weiter optimiert wird. Durch diese Vorgehensweise lässt sich ein optimales Gesamtergebnis erzielen, indem alle Möglichkeiten der Optimierung ausgeschöpft werden.

Die Wirkungsweise der Adaption von Ruckprofilen durch eine parameterabhängige Formfunktion sowie weitere Vorteile und Details werden im folgenden anhand eines Ausführungsbeispiels und in Verbindung mit den Figuren verdeutlicht. Dabei zeigen:

FIG 1     Verlauf eines rechteckförmiges Ruckprofils bei einer herkömmlichen Ruckbegrenzung,

FIG 2     ein schwingfähiges System mit ruckbegrenztem Lagesollwert und schwingendem Lageistwert,

FIG 3     den Betragsfrequenzgang der Übertragungsfunktion A(f), des ruckäquivalenten Filters

FIG 4     drei Formfunktionen,

FIG 5     drei Ruckprofile ,

FIG 6     den Betragsfrequenzgang der Übertragungsfunktion des jeweiligen ruckäquivalenten Filters,

FIG 7       drei Einschwingvorgänge und

FIG 8       den Betragsfrequenzgang der jeweiligen Formfunktion.

In FIG 1 ist beispielhaft ein rechteckförmiges Ruckprofil r(t) über der Zeit t dargestellt. Unter einem Ruck wird dabei die zeitliche Ableitung der Beschleunigung a(t) verstanden. Das Ruckprofil r(t) ist einmal durch seine maximale Ruckhöhe $r_0$, sowie durch die einzelnen Zeiten $t_r$, $t_a$ und $t_v$, die den Verlauf der Bewegung des bewegbaren Maschinenelementes beschreiben, charakterisiert. Um nach einer Bewegung ein möglich straffes Einschwingen eines Lageistwertes $x_{ist}$(t) eines bewegbaren Maschinenelementes zu gewährleisten, wird bei herkömmlichen Steuerverfahren eine sogenannte Ruckbegrenzung durchgeführt, bei der der maximale Ruck auf einen Wert z.B. $r_0$ begrenzt wird. Eine erste Verbesserung dieser herkömmlichen Ruckbegrenzung wurde bereits in der früheren Patentanmeldung der Anmelderin beschrieben, bei der der Verlauf des Rucks durch eine $\sin^2$-förmige Formfunktion modelliert bzw. angepasst wurde.

Um die fehlende Wirkung der Ruckbegrenzung systematisch zu beschreiben, wird wie in FIG 2 als schwingfähiges System M mit ruckbegrenztem Lagesollwert $x_{soll}$(t) und schwingendem Lageistwert $x_{ist}$(t) dargestellt, der Betragsfrequenzgang B(f) der Übertragungsfunktion A(f) des ruckäquivalentes Filters R berechnet. Der Betragsfrequenzgang B(f) der Übertragungsfunktion A(f) des ruckäquivalentes Filters R kann abhängig von den Begrenzungen (z.B. maximale Geschwindigkeit $v_0$, maximale Beschleunigung $a_0$, maximaler Ruck $r_0$) und dem Verfahrweg bzw. dem Bewegungsvorgang entlang der Bewegungsbahn x bestimmt werden. Der Verlauf des Betragsfrequenzgangs der Übertragungsfunktion A(f) erlaubt Aussagen über die Anregung des schwingfähigen Systems M im gesamten Frequenzbereich.

Die filternde Wirkung der Ruckbegrenzung wurde im Rahmen der Erfindung systematisch analysiert und optimiert. Durch die von der Steuerung vorgegebenen Begrenzungen $r_0$, $a_0$, $v_0$ ergibt sich für einen beliebigen Eingangslagesollwert $u_{soll}$(t) ein Ausgangslagesollwert $x_{soll}$(t) der z.B. einer Regelung oder Steuerung zur Regelung oder Steuerung der Bewegung bzw. des Verfahrvorgangs eines Maschinenelementes zugeführt wird.

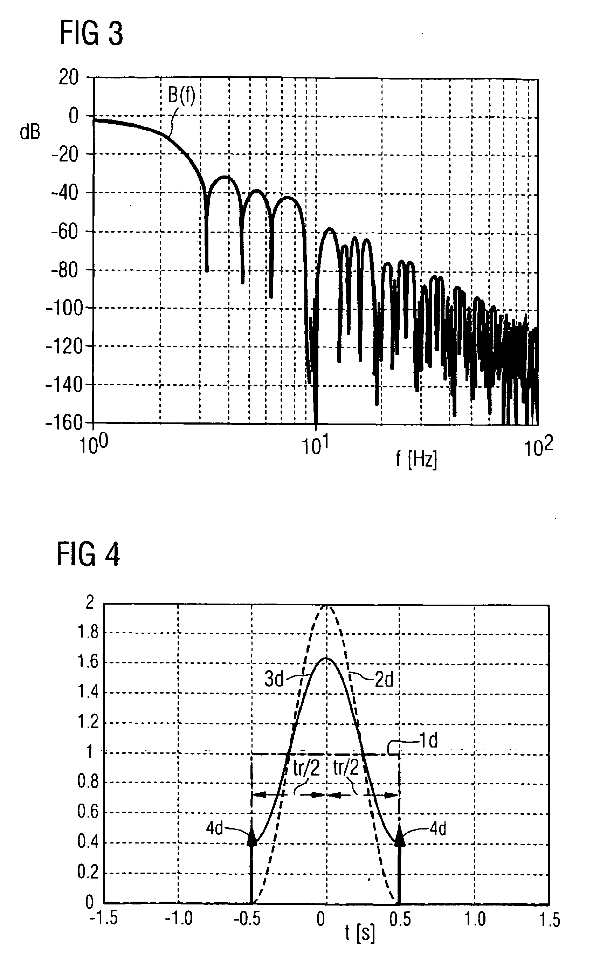

Der in FIG 3 beispielhaft dargestellte Betragsfrequenzgang B(f) der Übertragungsfunktion A(f) des ruckäquivalenten Filters R ergibt sich durch Division der Fouriertransformierten des Lagesollwertes $x_{soll}$(t) durch die Fouriertransformierte des Eingangslagesollwertes $u_{soll}$(t) und anschließender Betragsbildung. Für ein beliebiges mechanisches System lässt sich so die filternde Wirkung der Ruckbegrenzung bestimmen. Für die Berechnung des Betragsfrequenzgangs B(f) der Übertragungsfunktion A(f), gemäß FIG 3, des ruckäquivalenten Filters R wurde dass in FIG 1 gezeigte Ruckprofil r(t) dreimal hintereinander integriert und somit der Lagesollwert $x_{soll}$(t) berechnet.

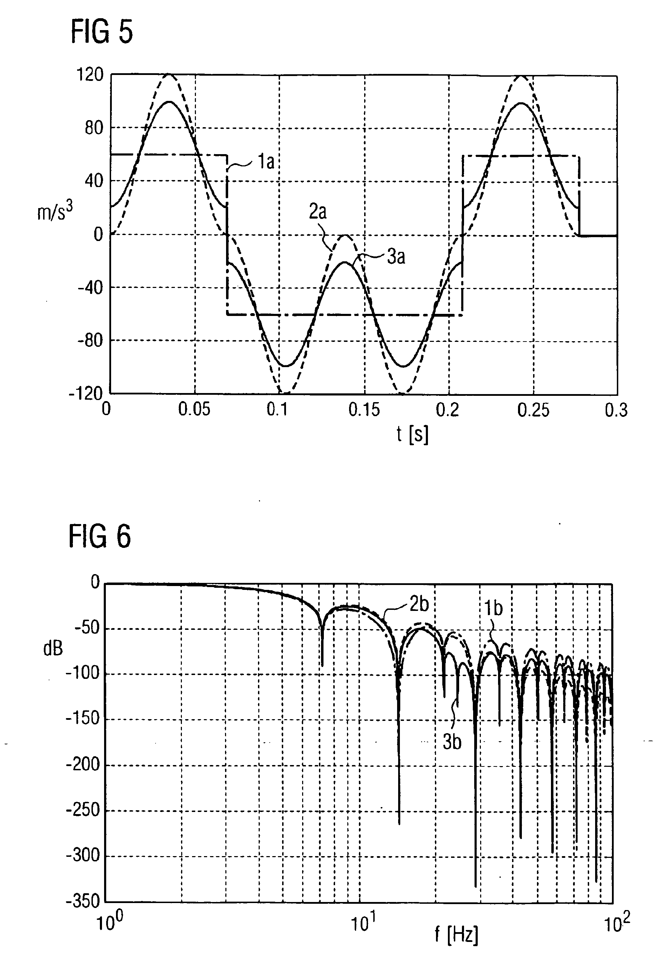

Analysiert man die Ruckbegrenzung mit Hilfe eines solchen ruckäquivalenten Filters R, lassen sich die erfindungsgemäßen systematischen Maßnahmen zur Minimierung der Schwingungsanregung gut nachvollziehen. Die Maßnahmen, die im folgenden beschrieben werden, gehen dabei weit über die bisher einfach gewandte herkömmliche Ruckbegrenzung sowie die Verwendung einer $\sin^2$-förmigen Formfunktion hinaus. Von zentraler Bedeutung ist dabei der Ansatz, durch eine parameterabhängige Formänderung des Ruckprofils r(t) eine geringere Schwingungsanregung der bewegbaren Maschinenelemente, wie z.B. der Werkzeuge der Maschine zu erreichen. Eingeführt wird an dieser Stelle eine sogenannte Formfunktion F(t) mit Hilfe der im folgenden ein optimiertes Ruckprofil r(t) gemäß FIG 5 generiert wird.

Die Erfindung beschreibt ein Steuerverfahren, bei der anders als bei den bisher vorgestellten Ansätzen nicht eine spezielle Formfunktion F(t) gewählt, sondern anhand der dominierenden Maschineneigenfrequenzen der Mechanik der Maschine eine optimale Formfunktion F(t) berechnet wird. Dadurch wird erreicht, dass bei geforderter Genauigkeit, die Maschinendynamik wesentlich gesteigert werden kann.

Es lässt sich mathematisch nachweisen, dass die Übertragungsfunktion A(f) eines beliebigen ruckäquivalenten Filters R sich entsprechend der Beziehung

$$A(f) = S \cdot \left[ \Im \left( F(t/t_r) \right) \right] \cdot \left[ si\left( \pi t_a f \right) \cdot si\left( \pi \left( t_a + t_v \right) f \right) \right] \cdot e^{-j\pi f \left( t_r + 2t_a + t_v \right)} \quad (1)$$

mit

f: Frequenz

$\Im$ (F(t)):Fouriertransformierte der Formfunktion F(t)

$$si(x) = \frac{\sin(x)}{x}$$

e: Eulersche Zahl

j: imaginäre Einheit

darstellen lässt, wobei $t_r$, $t_a$ und $t_v$ den in FIG 1 dargestellten Zeiten entsprechen. Der Faktor S, ist der sogenannte Multiplikator der Formfunktion $F(t/t_r)$ und dient der Anpassung der Amplitude der Formfunktion an die Höhe des Ruckprofils (Normierung der Formfunktion $F(t/t_r)$). Die Zeiten $t_r$, $t_a$ und $t_v$ ergeben sich aus den Randbedingungen (Maximalwert von Geschwindigkeit $v_0$, maximale Beschleunigung $a_0$ und maximaler Ruck $r_0$) sowie dem Verfahrweg x. Ziel ist es nun, das Ruckprofil r(t) derart zu verändern bzw. anzupassen, dass der Betragsfrequenzgang B(f) der Übertagungsfunktion A(f) derart verändert bzw. angepasst wird, dass die Frequenzen der Bandsperren des Betragesfrequenzgangs B(f) der Übertagungsfunktion A(f) des ruckäquivalenten Filters R, im wesentlichen mit den Eigenfrequenzen der Maschinenelemente und/oder der Maschine oder mit einer Auswahl solcher Eigenfrequenzen zusammenfällt und in den betreffenden Frequenzbereichen der Bandsperre eine möglichst hohe Dämpfung erzielt wird.

Ein Verlust der Dynamik soll dabei möglichst nicht auftreten, d.h. die Verfahrzeit bleibt bei großer Genauigkeit gleich. Der Betragsfrequenzgang B(f) der Übertragsübertragungsfunktion A(f) des ruckäquivalenten Filters R lässt sich im wesentlichen, wie Beziehung (1) zeigt anhand der Formfunktion $F(t/t_r)$ anpassen bzw. adaptieren. Unter Berücksichtigung der relevanten Eigenfrequenzen des schwingfähigen mechanischen Systems lässt sich damit eine Formfunktion $F(t/t_r)$ berechnen, die aufgrund der Filterwirkung gewährleistet, dass diese Frequenzen nicht angeregt werden. Unter Bandsperren, sind die Frequenzbereiche des Betragsfrequenzgangs B(f) der Übertagungsfunktion A(f) des ruckäquivalenten Filters R zu verstehen, bei denen der Betragsfrequenzgang B(f) der Übertragungsfunktion A(f) gemäß FIG 3 jeweils spitzenförmig eine hohe Dämpfung aufweist. Dies zeigt sich in der Darstellung gemäß FIG 3 durch talförmige Einkerbungen des Kurvenverlaufs.

Realisieren lässt sich eine solche Anpassung der Formfunktion F(t) an die Maschineneigenschaften durch eine sogenannte parameterabhängige Formfunktion $F(t,\alpha)$, deren Verlauf mittels eines einzigen Parameters $\alpha$ beeinflusst werden kann. Es sei an dieser Stelle darauf hingewiesen, dass selbstverständlich auch Formfunktionen gewählt werden können, die von mehreren Parametern abhängen.

Die Vorgehensweise wird im folgenden anhand der parameterabhängigen Formfunktion $F_s(t,\alpha)$ gezeigt, die sich aus der Addition einer rechteckförmigen Formfunktion $F_1(t)$ und einer $\cos^2$-förmigen Formfunktion $F_2(t)$ ergibt. Der Parameter $\alpha$ bestimmt die Gewichtung der Anteile der beiden Formfunktionen $F_1(t)$ und $F_2(t)$.

Die rechteckförmige Formfunktion $F_1(t)$ ist durch die Beziehung (2) gegeben. In FIG 4 ist die rechteckförmige Formfunktion $F_1(t)$ als Graph 1d graphisch dargestellt.

$$F_1(t) = \prod_{-\frac{t_r}{2}}^{\frac{t_r}{2}} \left( \frac{t}{t_r} \right) \qquad (2)$$

mit

$$\prod_{a}^{b} (x) = 1$$

im Intervall zwischen a und b

$$\prod_{a}^{b} (x) = 0$$

sonst

Die Fouriertransformierte der Formfunktion $F_1(t)$ ist durch die Beziehung (3) gegeben.

$$\Im(F_1(t)) = \frac{\sin(\pi f t_r)}{\pi f t_r} \qquad (3)$$

Der zeitliche Verlauf der $\cos^2$-förmigen Formfunktion $F_2(t)$ ist durch die Beziehung (4) gegeben und wird in FIG 4 durch den Graphen 2d graphisch dargestellt.

$$F_2(t) = 2 \cdot \prod_{-\frac{t_r}{2}}^{\frac{t_r}{2}} \left( \frac{t}{t_r} \right) \cdot \cos^2(\pi t / t_r) \qquad (4)$$

Die Fouriertransformierte der Formfunktion $F_2(t)$ ist durch die Beziehung (5) gegeben.

$$\Im(F_2(t)) = \frac{\sin(\pi f t_r)}{\pi f t_r} \cdot \frac{1}{1-(f t_r)^2} \qquad (5)$$

Die beiden Formfunktionen $F_1(t)$ und $F_2(t)$ werden nun addiert und jeweils mit einem einzigen Parameter $\alpha$ gewichtet, wobei die Gewichtung von $F_1(t)$ durch Multiplikation mit dem Parameter $\alpha$ und die Gewichtung von $F_1(t)$ durch Multiplikation mit einem Faktor $(1-\alpha)$ erfolgt. Es ergibt sich somit die Parameterabhängige Formfunktion $F_s(t,\alpha)$ entsprechend der Beziehung (6)

$$F_s(t,\alpha) = \alpha \cdot \prod_{-\frac{t_r}{2}}^{\frac{t_r}{2}} \left( \frac{t}{t_r} \right) + 2(1-\alpha) \cdot \prod_{-\frac{t_r}{2}}^{\frac{t_r}{2}} \left( \frac{t}{t_r} \right) \cdot \cos^2(\pi t / t_r) \qquad (6)$$

Der zeitliche Verlauf der parameterabhängigen Formfunktion $F_s(t)$ ist in FIG 4 als Graph 3d dargestellt.
Die Fouriertransformierte der parameterabhängigen Formfunktion $F_s(t, \alpha)$ ist durch die Beziehung (7) gegeben.

$$\Im(F_s(t,\alpha)) = \frac{\sin(\pi f t_r)}{\pi f t_r} \cdot \frac{1-\alpha(f t_r)^2}{1-(f t_r)^2} \qquad (7)$$

Durch die Addition der beiden Formfunktionen $F_1(t)$ und $F_2(t)$ und Gewichtung mit dem Parameter $\alpha$ ergibt sich die parameterabhängige Formfunktion $F_s(t,\alpha)$. Im Betragsfrequenzgang der Fouriertransformierten der parameterabhängigen Formfunktion $F_s(t,\alpha)$ erhält man eine zusätzliche Nullstelle bei der Frequenz

$$f_0 = \frac{1}{\sqrt{\alpha} \cdot t_r} \qquad (8)$$

die vom Parameter $\alpha$ und von der Ruckzeit $t_r$ abhängt. Da die Ruckzeit $t_r$ in der Regel durch den Bewegungs- bzw. Verfahrvorgang vorgegeben ist und nicht beliebig verändert werden kann, ist in den Beziehungen (6) bis (8) die Ruckzeit $t_r$ in der Regel weitgehend vorgegeben und ist somit nicht als unabhängiger vom Anwender frei wählbarer Parameter anzusehen.
Der Betrag der Fouriertransformierten der Formfunktion $F_s(t,\alpha)$ hängt derart vom Parameter $\alpha$ ab, dass durch Variationen von $\alpha$ die Nullstelle $f_0$ sich im gesamten Frequenzbereich verschieben lässt. Mit dem Parameter $\alpha$ wird somit ein zusätzlicher Freiheitsgrad erzeugt.
Die in FIG 3 dargestellten Bandsperren, wobei unter Bandsperren die Frequenzbereiche zu verstehen sind, bei denen der Betragsfrequenzgang $B(f)$ der Übertragungsfunktion $A(f)$ jeweils spitzenförmig eine hohe Dämpfung aufweist, können mit Hilfe des Parameters $\alpha$ derart verschoben werden, dass die Frequenzen der Bandsperren im wesentlichen mit den Eigenfrequenzen des Maschinenelementes und/oder der Maschine oder mit einer Auswahl solcher Eigenfrequenzen zusammenfallen. Der Parameter $\alpha$ kann für jedes Verfahrprofil so berechnet werden, dass für eine vorgegebene Frequenz zwischen $1/t_r$ und unendlich die schwingfähige Mechanik der Maschine bzw. des bewegbaren Maschinenelementes nicht angeregt wird. Damit lassen sich gezielt die Resonanzfrequenzen der Mechanik unterdrükken.

Für $\alpha = 0$ liegt die Frequenz $f_0$ im Unendlichen, was der $\cos^2$förmigen Formfunktion $F_2(t)$ entspricht. Für $\alpha = 1$ ist die Frequenz $f_0$ genau $1/t_r$, was der rechteckförmigen Formfunktion $F_1(t)$ entspricht.

Grundsätzlich kann bei dieser Kombination der beiden Formfunktionen mit einem beliebigen Gewichtungsfaktor $\alpha$ der gesamte Frequenzbereich abgedeckt werden. Im wesentlichen sinnvoll ist aber nur ein Bereich für den Gewichtungsfaktor $\alpha$ von 0 bis 1. Der Vorteil den Gewichtungsfaktor $\alpha$ auf 0 bis 1 zu begrenzen liegt in folgenden Punkten:

- Werte der Formfunktion sind immer positiv
- Monotoner Beschleunigungsauf- und -abbau
- Geringere Stromwärmeverluste
- Geringere Leistung, damit kleiner Motor ausreichend

In FIG 5 sind die mittels Formfunktionen angepassten Ruckprofile 2a und 3a, sowie das ursprüngliche unveränderte rechteckförmige Ruckprofil 1a dargestellt. Das $\cos^2$-förmige Ruckprofil 2a wurde dabei mittels der in FIG 4 dargestellte $\cos^2$förmige Formfunktion 2d gemäß Beziehung (4) angepasst. Das parameterabhängige Ruckprofil 3a ist durch Anpassung des rechteckförmigen Ruckprofils 1a mittels der erfindungsgemäßen parameterabhängigen Formfunktion $F_s(t,\alpha)$ gemäß Beziehung (6), welche in FIG 4 als Graph 3d visualisiert ist, hervorgegangen. Dabei wurde in dem Ausführungsbeispiel der Parameter $\alpha = 0{,}345$ gewählt. An dieser Stelle sei bemerkt, dass eine Formänderung eines Ruckprofils $r(t)$ mittels der parameterabhängigen Formfunktion $F_s(t,\alpha)$ derart vorgenommen wird, dass die Fläche des Ruckprofils $r(t)$ nach der Formänderung der Fläche des Ruckprofils $r(t)$ vor der Formänderung bei gleicher Zeit entspricht. Hierdurch wird erreicht, dass keine Wegverluste auftreten. Die Formfunktion $F_2(t)$ weist deshalb einen multiplikativen Faktor von "2" auf.

FIG 6 zeigt die aus den jeweiligen Ruckprofilen 1a, 2a und 3a gemäß FIG 5 resultierenden Betragsfrequenzgänge der Übertragungsfunktionen des jeweilig daraus resultierenden ruckäquivalenten Filters. Das rechteckförmige Ruckprofil 1a weist den Betragsfrequenzgang 1b, das $\cos^2$-förmige Ruckprofil 2a weist den Betragsfrequenzgang 2b und das parameterabhängige Ruckprofil 3a weist den Betragsfrequenzgang 3b auf.

In dem Ausführungsbeispiel beträgt die Resonanzfrequenz der Mechanik der Maschine 24 Hz. Wie sich anhand von FIG 6 leicht ablesen lässt, weist bei 24 Hz, der Betragsfrequenzgang des mittels der parameterabhängigen Formfunktion $F_s(t,\alpha)$ angepassten Ruckprofils 3a gemäß FIG 5 eine deutlich höhere Dämpfung auf, als die Betragsfrequenzgänge der Ruckprofile 1a und 2a, welche im Falle des Ruckprofils 1a einem rechteckförmigen Ruckprofil, bzw. im Falle des Ruckprofils 1b einem mittels der $\cos^2$-förmigen Formfunktion $F_2(t)$ veränderten Ruckprofil, entsprechen. Folglich wird die Mechanik der Maschine, bezüglich der Resonanzfrequenz von 24 Hz, bei Verwendung eines parameterabhängigen Ruckprofils weniger stark angeregt als bei der Verwendung der $\cos^2$-förmigen Ruckprofils oder eines rein rechteckförmigen Ruckprofils, was ein schnelleres und verbessertes Einschwingverhalten des Lageistwerts auf den Lagesollwert als Folge hat.

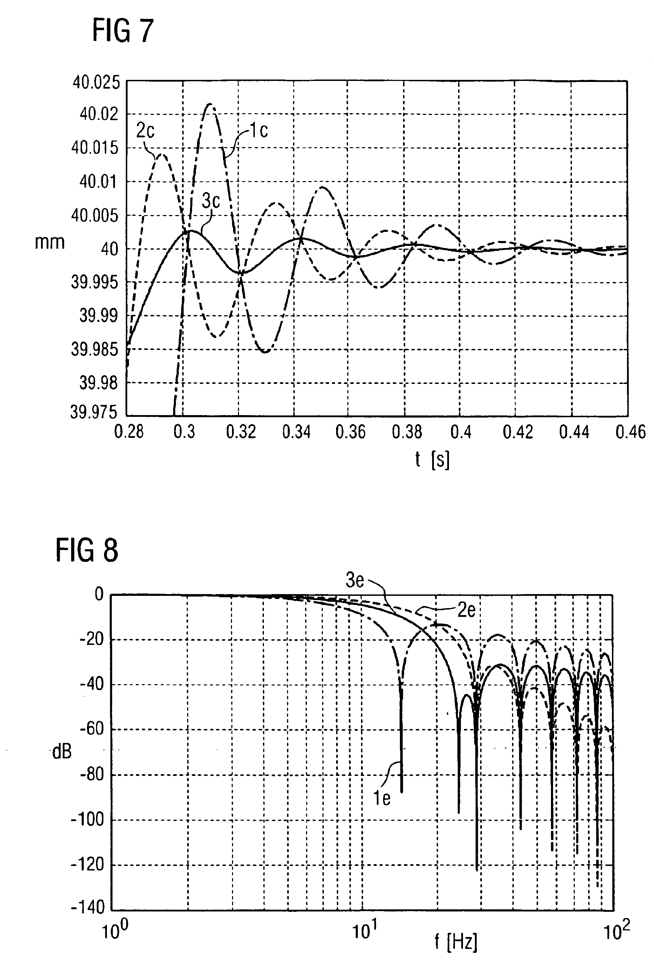

In FIG 7 ist die Wirkung der Anpassung der Ruckprofile 1a, 2a und 3a entsprechend dem Ausführungsbeispiel gemäß FIG 5 und FIG 6 graphisch dargestellt. Ein bewegbares Maschinenelement z.B. ein Werkzeug, wird in dem Ausführungsbeispiel von der Lageposition 0 auf den Eingangslagesollwert $u_{soll}(t)=40$ mm verfahren. In FIG 7 ist jeweils der Lageistwert $x_{ist}(t)$ des bewegbaren Maschinenelementes über der Zeit t aufgetragen. Der Graph 1c gibt dabei den Verlauf des Lageistwerts $x_{ist}(t)$ des Maschinenelementes bei Verwendung des rechteckförmigen Ruckprofils 1a gemäß FIG 5 an. Der Graph 2c gibt den Lageistwert des Maschinenelementes bei Verwendung des $\cos^2$-förmigen Ruckprofils 2a an und der Graph 3c gibt den Verlauf des Lageistwertes $x_{ist}(t)$ des Maschinenelementes bei Verwendung der parameterabhängigen Ruckprofils 3a mit dem Parameter $\alpha=0{,}345$ an. Wie sich anhand von Graph 3c leicht erkennen lässt, schwingt der Lageistwert $x_{ist}(t)$ deutlich schneller und besser auf den Eingangslagesollwert $u_{soll}(t)=40$ mm ein, als die in den Graphen 1c und 2c dargestellten Lageistwerte.

Durch die erfindungsgemäße parameterabhängige Formfunktion kann somit bei geforderter Genauigkeit die Maschinendynamik gegenüber dem Stand der Technik wesentlich gesteigert werden.

In FIG 8 ist sind die Betragsfrequenzgänge der Fouriertransformierten, der zu FIG 5 zugehörigen rechteckförmigen Formfunktion, als Graph 1e, der zugehörigen $\cos^2$-förmigen Formfunktion als Graph 2e, und der zugehörigen parameterabhängigen Formfunktion, mit $\alpha=0{,}356$, als Graph 3e dargestellt. Es ist deutlich zu sehen, dass der Betragsfrequenzgang der parameterabhängigen Formfunktion unter anderem eine Bandsperre mit hoher Dämpfung in einem Frequenzbereich um 24 Hz aufweist. Die Dämpfung ist in diesem Sperrbereich dabei sehr viel höher als bei dem Betragsfrequenzgang der rechteckförmigen Formfunktion oder der $\cos^2$-förmigen Formfunktion. Auch hier zeigt sich die deutliche Verbesserung, die sich durch die Verwendung einer parameterabhängigen Formfunktion im Vergleich zu den aus dem Stand der Technik bekannten rechteckförmigen oder cos²-förmigen Formfunktion erzielen lässt.

An dieser Stelle sei bemerkt, dass der Begriff der cos²förmigen Formfunktion bis auf die Phasenlage identisch ist mit dem Begriff einer sin²-förmigen Formfunktion. Entsprechend könnte die cos²-Funktion in der Beziehung (4)und der Beziehung (6) durch eine sin²-Funktion ersetzt werden.

Der in der rechten eckigen Klammer von Beziehung (1) befindliche Teil der Beziehung (1) beschreibt die Abhängigkeit der Übertragungsfunktion A(f) des ruckäquivalentes Filters R, von den Zeitspannen $t_a$ und $t_v$ gemäß FIG 1. Im Rahmen einer Gesamtoptimierung bietet es sich nun an, dass vor Ausführung, der von der Steuerung der Maschine vorgegebenen Bewegungsbahn x des Maschinenelementes, zuerst ein entsprechendes optimiertes rechteckförmiges Ruckprofil r(t) bestimmt wird, so dass die Frequenzen der Bandsperren im wesentlichen mit den Eigenfrequenzen des Maschinenelementes und/oder der Maschine oder mit einer Auswahl solcher Eigenfrequenzen zusammenfallen. Die Zeitspannen $t_a$ und $t_v$ sind entsprechend so zu bestimmen, dass die obengenannte Bedingung erfüllt wird. Anschließend wird das bereits optimierte rechteckförmige Ruckprofil r(t) durch Anpassung mittels der parameterabhängigen Formfunktion Fs(t,$\alpha$), weiter optimiert.

Alternativ kann sich die parameterabhängige Formfunktion $F_s$(t,$\alpha$) auch additiv aus einer Dirac-Formfunktion $F_3$(t)und der rechteckförmigen Formfunktion $F_1$(t)zusammensetzen. Grundsätzlich kann auch bei dieser Kombination der beiden Formfunktionen mit einem beliebigen Parameter $\alpha$ der gesamte Frequenzbereich abgedeckt werden. Im wesentlichen sinnvoll, aus den bereits weiter oben genannten Vorteilen ist aber auch hier nur ein Bereich für den Parameter $\alpha$ von 0 bis 1.

Die Dirac-Formfunktion ($F_3$(t)) ist dabei durch die Beziehung:

$$F_3(t) = \frac{1}{2}\delta\left(t + \frac{t_r}{2}\right) + \frac{1}{2}\delta\left(t - \frac{t_r}{2}\right) \qquad (9)$$

gegeben und wird in FIG 4 durch den Graphen 4d graphisch dargestellt.

Die Fouriertransformierte der Formfunktion $F_3$(t) ist durch die Beziehung (10) gegeben.

$$\Im\left(F_3\left(t\right)\right) = \cos\left(\pi f t_r\right) \qquad (10)$$

Für die parameterabhängige Formfunktion $F_s$(t,$\alpha$) ergibt sich somit:

$$F_s(t,\alpha) = \alpha \cdot \prod_{-\frac{t_r}{2}}^{\frac{t_r}{2}}\left(\frac{t}{t_r}\right) + (1-\alpha)\cdot\left(\frac{1}{2}\delta\left(t + \frac{t_r}{2}\right) + \frac{1}{2}\delta\left(t - \frac{t_r}{2}\right)\right) \qquad (11)$$

Für die Fouriertransformierte der parameterabhängige Formfunktion $F_s$(t,$\alpha$) ergibt sich:

$$\Im\left(F_s(t,\alpha)\right) = si(\pi f t_r) \cdot \frac{\alpha\tan(\pi f t_r) + (1-\alpha)\pi f t_r}{\tan(\pi f t_r)} \qquad (12)$$

Durch den einzelnen Parameter $\alpha$ kann im wesentlichen der Frequenzbereich einer einzelnen dem Parameter zugehörigen Bandsperre gezielt verändert werden. Generell sind ist aber auch eine parameterabgängige Formfunktion F(t,$\alpha_i$), bei der die Formfunktion von mehreren Parametern $\alpha_i$ (i=1,2,3...) abhängt, möglich. Durch gezielte Veränderung von einzelnen Parametern $\alpha_i$ kann somit der dem jeweiligen Parameter zugehörige Frequenzbereich von unterschiedlichen Bandsperren gezielt beeinflusst werden. Jedem einzelnen Parameter ist somit genau den Frequenzbereich einer Bandsperre zum gezielten Verändern zugeordnet.

Die analytische Bestimmung einer parameterabhängigen Formfunktion F(t,$\alpha_i$), welche von mehreren Parametern $\alpha_i$ abhängt, wird durchgeführt, indem man verschiedene Basisformfunktionen $F_i$(t) wie z.B. $F_1$(t), $F_2$(t) und $F_3$(t)

entsprechend der Beziehung

$$F(t,\alpha_i) = \sum_i \alpha_i \cdot F_i(t) \qquad \texttt{i=1,2,3...} \qquad (13)$$

linear überlagert, wobei wegen der Forderung

$$\int_{-t_R/2}^{t_R/2} r(\tau)\,d\tau = 1 \qquad (14)$$

für die Parameter $\alpha_i$

$$\sum_i \alpha_i = 1 \qquad (15)$$

gelten muss. Die Parameter $\alpha_i$ sind so zu bestimmen, dass im Bereich der Resonanzfrequenzen die Anregung minimal wird. Als Basisformfunktionen werden hierbei die bereits eingeführte rechteckförmige Formfunktion $F_1(t)$, die $\cos^2$-förmige Formfunktion $F_2(t)$ und die Dirac-Formfunktion $F_3(t)$ verwendet Selbstverständlich könnte aber auch eine dreieckförmige Formfunktion oder eine trapezförmige Formfunktion oder eine diesbezüglich ähnliche Formfunktionen als Basisformfunktion verwendet werden.

**Patentansprüche**

1. Steuerungsverfahren zur ruckbegrenzten Geschwindigkeitsführung (v) eines bewegbaren Maschinenelementes einer numerisch gesteuerten industriellen Bearbeitungsmaschine wie einer Werkzeugmaschine, Produktionsmaschine oder einem Roboter, wobei eine Bewegungsbahn des Maschinenelementes in unmittelbar aufeinanderfolgende interpolierbare Bewegungsabschnitte aufgelöst ist, wobei bei der Interpolation resultierende Ruckprofile (r(t)) gezielt derart angepasst werden, dass eine filternde Wirkung der Ruckbegrenzung als Bandsperren so beeinflusst wird, dass die Frequenzen der Bandsperren mit den Eigenfrequenzen des Maschinenelementes und/oder der Maschine oder mit einer Auswahl solcher Eigenfrequenzen zusammenfallen, **dadurch gekennzeichnet, dass** die Anpassung der Ruckprofile (r(t)) durch eine parameterabhängige Formfunktion ($F_s(t,\alpha)$, $F_s(t,\alpha_i)$) erzielt wird, wobei eine Formänderung des Ruckprofils (r(t)) mittels der parameterabhängigen Formfunktion ($F_s(t,\alpha)$, $F_s(t,\alpha_i)$) derart vorgenommen wird, dass die Fläche des Ruckprofils (r(t)) nach der Formänderung der Fläche des Ruckprofils (r(t)) vor der Formänderung bei gleicher Zeit entspricht.

2. Steuerverfahren nach Anspruch 1, **dadurch gekennzeichnet, dass** zur gezielten Anpassung der Frequenzen der Bandsperren, an die Eigenfrequenzen des Maschinenelementes und/oder der Maschine oder an eine Auswahl solcher Eigenfrequenzen, die Formfunktion ($F_s(t,\alpha_i)$) mittels Parameter ($\alpha_i$) gezielt angepasst werden.

3. Steuerverfahren nach Anspruch 1, **dadurch gekennzeichnet, dass** zur gezielten Anpassung der Frequenz einer einzelnen Bandsperre, an eine Eigenfrequenz des Maschinenelementes und/oder der Maschine, die Formfunktion ($F_s(t,\alpha)$) mittels eines einzigen Parameters ($\alpha$) gezielt angepasst wird.

4. Steuerverfahren nach Anspruch 3, **dadurch gekennzeichnet, dass** die parameterabhängige Formfunktion ($F_s(t,\alpha)$) sich additiv aus einer rechteckförmigen Formfunktion ($F_1(t)$) und einer $\cos^2$-förmigen oder $\sin^2$-förmigen Formfunktion ($F_2(t)$) zusammensetzt.

5. Steuerverfahren nach Anspruch 3, **dadurch gekennzeichnet, dass** die parameterabhängige Formfunktion ($F_s(t,$

$\alpha$)) sich additiv aus einer rechteckförmigen Formfunktion (F$_1$(t)) und einer Dirac-Formfunktion (F$_3$(t)) zusammensetzt.

**6.** Steuerverfahren nach einem der vorhergehenden Ansprüche, **dadurch gekennzeichnet, dass** vor Ausführung einer vorgegebenen Bewegungsbahn (x) des Maschinenelementes, zuerst ein entsprechendes optimiertes rechteckförmiges Ruckprofil (r(t)) bestimmt wird, so dass die Frequenzen der Bandsperren im wesentlichen mit den Eigenfrequenzen des Maschinenelementes und/oder der Maschine oder mit einer Auswahl solcher Eigenfrequenzen zusammenfallen und anschließend das bereits optimierte rechteckförmige Ruckprofil (r(t)) durch Anpassung mittels der parameterabhängigen Formfunktion (F$_s$(t,$\alpha$), F$_s$(t,$\alpha_i$)), weiter optimiert wird.

**Claims**

**1.** Control method for controlling a speed of a movable machine element of a numerically controlled industrial processing machine with jerk limitation (v), such as a machine tool, production machine or a robot, with a travel path of the movable machine element being decomposed into a plurality of sequentially arranged, interpolatable travel sections, with jerk profiles (r(t)) resulting from the interpolatation being explicitly adapted such that a filtering effect of the jerk limiting as bandpass filtering is influenced so that the frequencies of the bandpass filters coincide with the characteristic frequencies of the machine element and/or of the machine or with a selection of such characteristic frequencies, **characterised in that** the adaptation of the jerk profiles (r(t) is obtained with a parameter-dependent shape function (F$_s$(t,$\alpha$), F$_s$ (t,$\alpha_i$)), with the change in shape of the jerk profile (r(t)) being obtained by means of a parameter-dependent shape function (F$_s$(t,$\alpha$), F$_s$(t,$\alpha_i$)) such that the surface of the jerk profile (r(t)) after the change in shape corresponds to the surface of the jerk profile (r(t))before the change in shape at the same time.

**2.** Control method according to claim 1, **characterized in that**, for explicitly adapting the frequencies of the bandpass filters to the characteristic frequencies of the machine element and/or of the machine or to a subset of such characteristic frequencies, the shape function (F$_s$(t,$\alpha_i$)) is explicitly adapted by means of parameters ($\alpha_i$).

**3.** Control method according to claim 1, **characterized in that**, for explicitly adapting the frequencies of the bandpass filters to the characteristic frequencies of the machine element and/or of the machine or to a subset of such characteristic frequencies, the shape function (F$_s$(t,$\alpha$)) is explicitly adapted by means of and individual parameter ($\alpha$).

**4.** Control method according to claim 3, **characterized in that**, the parameter-dependent shape function (F$_s$(t,$\alpha$)) is obtained by adding a rectangular shape function (F$_1$(t) and a $\cos^2$ or $\sin^2$ shape function F$_2$(t).

**5.** Control method according to claim 3, **characterized in that**, the parameter-dependent shape function (F$_s$(t,$\alpha$)) is obtained by adding a rectangular shape function (F$_1$(t) and a Dirac shape function (F$_3$(t).

**6.** Control method according to one of the previous claims, **characterized in that**, before executing a defined travel path (x) of the movable machine element, a correspondingly optimised rectangular jerk profile (r(t)) is first defined, so that the blocking frequencies of the bandpass filters coincide essentially with the characteristic frequencies of the machine element, and/or of the machine or with a selection of such characteristic frequencies and subsequently the previously optimized rectangular jerk profile (r(t)) is further optimised by means of the parameter-dependent shape function (Fs(t,$\alpha$), (Fs(t,$\alpha_i$)).

**Revendications**

**1.** Procédé de commande pour commander en limitant les à-coups la vitesse (v) d'un élément de machine mobile d'une machine industrielle de fabrication à commande numérique telle qu'une machine - outil, une machine de production ou un robot, une trajectoire de mouvement de l'élément de machine étant décomposée en tronçons de mouvement directement successifs et pouvant être interpolés, des profils d'à-coups (r (t)) résultant de l'interpolation étant adaptés de manière ciblée de telle sorte qu'une action filtrante de la limitation d'à-coups sous forme de coupe-bandes est influencée de telle sorte que les fréquences des coupe-bandes coïncident avec les fréquences propres de l'élément de machine et/ou de la machine ou avec une sélection de ces fréquences propres, **caractérisé par le fait que** l'adaptation des profils d'à-coups (r (t)) est obtenue par une fonction de mise en forme dépendante de paramètres (F$_s$ (t, $\alpha$), F$_s$ (t, $\alpha_i$)), une modification de mise en forme du profil d'à-coups (r (t)) étant effectuée de telle sorte au moyen de la fonction de mise en forme dépendante de paramètres (F$_s$ (t, $\alpha$), F$_s$ (t, $\alpha_i$)) que la surface du profil d'à-coups (r (t)) après la modification de mise en forme correspond à la surface du profil d'à-coups (r (t)) avant la modification de mise en forme au même instant.

**2.** Procédé de commande selon la revendication 1, **caractérisé par le fait que**, pour l'adaptation ciblée des fréquences des coupe-bandes aux fréquences propres de l'élément de machine et/ou de la machine ou à une sélection de ces fréquences propres, on adapte la fonction de mise en forme ($F_s$ (t, $\alpha_i$)) de manière ciblée au moyen des paramètres ($\alpha_i$).

**3.** Procédé de commande selon la revendication 1, **caractérisé par le fait que**, pour l'adaptation ciblée de la fréquence d'un coupe-bande individuel à une fréquence propre de l'élément de machine et/ou de la machine, on adapte la fonction de mise en forme ($F_s$ (t, $\alpha$)) de manière ciblée au moyen d'un seul paramètre ($\alpha$).

**4.** Procédé de commande selon la revendication 3, **caractérisé par le fait que** la fonction de mise en forme dépendante de paramètres ($F_s$ (t, $\alpha$)) se compose par addition d'une fonction de mise en forme ($F_1$ (t)) rectangulaire et d'une fonction de mise en forme ($F_2$ (t)) en forme de $\cos^2$ ou de $\sin^2$.

**5.** Procédé de commande selon la revendication 3, **caractérisé par le fait que** la fonction de mise en forme dépendante de paramètres ($F_s$ (t, $\alpha$)) se compose par addition d'une fonction de mise en forme ($F_1$ (t)) rectangulaire et d'une fonction de mise en forme ($F_3$ (t)) de Dirac.

**6.** Procédé de commande selon l'une des revendications précédentes, **caractérisé par le fait que**, avant l'exécution d'une trajectoire de mouvement prédéterminée (x) de l'élément de machine, on détermine d'abord un profil d'à-coups (r (t)) rectangulaire optimisé correspondant de telle sorte que les fréquences des coupe-bandes coïncident globalement avec les fréquences propres de l'élément de machine et/ou de la machine ou avec une sélection de ces fréquences propres puis on optimise encore le profil d'à-coups (r (t)) rectangulaire optimisé grâce à une adaptation au moyen de la fonction de mise en forme dépendante de paramètres ($F_s$ (t, $\alpha$), $F_s$ (t, $\alpha_i$)).

## FIG 1

## FIG 2

# FIG 3

# FIG 4

## FIG 5

## FIG 6

# FIG 7

# FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10200680
- DE 10063722